# EUROPEAN PATENT SPECIFICATION

(11) **EP 3 124 211 B1**
(45) Date of publication and mention of the grant of the patent: **11.03.2020**
(21) Application number: 15768424.2
(22) Date of filing: 24.03.2015
(51) Int. Cl.: B29C 67/00, G09B 23/28, C09C 1/00, G09B 19/00, B33Y 70/00, B29C 64/112, C09C 3/06, C09C 3/08

(54) **INK FOR MANUFACTURING THREE-DIMENSIONALLY SHAPED ARTICLE AND UTILIZATION THEREOF**
TINTE ZUR HERSTELLUNG EINES DREIDIMENSIONAL GEFORMTEN ARTIKELS UND VERWENDUNG DAVON
ENCRE POUR LA FABRICATION D'UN ARTICLE DE FORME TRIDIMENSIONNELLE ET UTILISATION CORRESPONDANTE

(30) Priority: 26.03.2014 JP 2014064462
(43) Date of publication of application: 01.02.2017
(73) Proprietor: Mimaki Engineering Co., Ltd., Tomi-City, Nagano 389-0512 (JP)
(72) Inventor: TABAYASHI, Isao, Tomi-city Nagano 389-0512 (JP)
(74) Representative: Hinkelmann, Klaus
(86) International application number: PCT/JP2015/058963
(87) International publication number: WO 2015/147002

(56) References cited:
- EP-A1- 0 913 432
- JP-A- 2004 538 191
- JP-A- 2005 314 540
- JP-A- 2008 081 517
- JP-A- 2010 077 218
- JP-A- 2011 156 783
- JP-A- 2013 241 565
- US-A1- 2004 187 714

## Description

### TECHNICAL FIELD

This invention relates to an ink used to manufacture three-dimensionally molded articles, and uses of the ink.

### BACKGROUND ART

Patent Literature 1 describes a method of manufacturing three-dimensionally molded articles by depositing fine particles in multiple layers.

### CITATION LIST

Patent Literature 1: Japanese Unexamined Patent Publication No. 2001-162351 (disclosed on June 19, 2001)

Documents US 2004/187714 A1 and EP 0 913 432 A1 also disclose similar methods for printing a three-dimensional object.

### SUMMARY OF INVENTION

### TECHNICAL PROBLEMS

Some of three-dimensionally molded articles manufactured for certain purposes may be cut and observed in cross section. Assuming that the three-dimensionally molded article is an internal organ model, one can more closely study and learn the organ structure by observing the model in cross section. However, the three-dimensionally molded articles manufactured by the conventional methods are primarily white and then colored with coloring materials. Such three-dimensionally molded articles are naturally white when viewed in cross section. This is inconvenient to accurately grasp the structure of a target object based on which the three-dimensionally molded article has been manufactured.

One may contemplate using coloring inks to manufacture three-dimensionally molded articles, which has been studied by the inventors of this application. Their study has revealed that merely forming layers of the known coloring inks may fail to manufacture three-dimensionally molded articles colored as desired.

To address this issue, this invention is directed to providing a three-dimensionally molded article colored as desired inside as well as on an outer surface thereof.

### SOLUTIONS TO PROBLEMS

The inventors of this application have searched for reasons why merely forming layers of the coloring inks fails in desired coloration of three-dimensionally molded articles in cross section. They have found out that the lack of opacity in coloring agents contained in the used inks is the origin of poor results in color reproduction by subtractive color mixing, unlike two-dimensional color printing on a white substrate. Based on this finding, the inventors have arrived at the idea of imparting opacity to an ink per se against coloring agents contained in the ink.

An ink for manufacturing three-dimensionally molded articles disclosed herein contains a plurality of different coloring components that differ in absolute refractive index. An outer surface of a white coloring components is at least partly covered with another one of the coloring components except white obtained by coating a white particle with a colored resin of any color except white or by adhering a pre-colored resin particle of any color except white.

The coloring component on the inner side reflects light transmitted through the coloring component on the outer side, allowing for vibrant color reproduction of the outer coloring component. The three-dimensionally molded article can accordingly be colored as desired inside as well as on its outer surface.

In the ink for manufacturing three-dimensionally molded articles disclosed herein, an outer surface of a white coloring component may preferably be at least partly covered with a coloring component of any color but white.

The white coloring component excels in color opacity, allowing for more vibrant color reproduction of the coloring component covering the white coloring component.

In the ink for manufacturing three-dimensionally molded articles disclosed herein, the white coloring component may preferably be in the form of white pigment particles.

The white pigment particles excel in color opacity, allowing for more vibrant color reproduction of the coloring component covering the white pigment particles.

The ink for manufacturing three-dimensionally molded articles disclosed herein may preferably be characterized in that the white coloring component is in the form of hollow particles, and outer surfaces of the hollow particles are at least partly covered with a coloring component of any color but white.

The white hollow particles excel in color opacity like the pigment particles, allowing for more vibrant color reproduction of the coloring component covering the white pigment particles.

A three-dimensionally molded article disclosed herein is manufactured from the ink for manufacturing three-dimensionally molded articles described above.

Any parts of the three-dimensionally molded article manufactured from the ink for manufacturing three-dimensionally molded articles disclosed herein may be found to be colored as desired when they are cut and viewed in cross section. Thus, the manufactured three-dimensionally molded article can excel in coloration in cross section as well.

The three-dimensionally molded article disclosed herein may further include a portion manufactured from a transparent ink.

By combining a transparent portion and a portion manufactured from the ink for manufacturing three-dimensionally molded articles disclosed herein, some part of the molded article can be accentuated more or less than the other part to an observer's eye. For example, a portion to be most highlighted to an observer's eye is manufactured from the ink for manufacturing three-dimensionally molded articles disclosed herein. On the other hand, a portion, which may be drawn upon for the most highlighted portion but is not necessarily as noticeable as the highlighted portion, is manufactured from the transparent ink.

A manufacturing method for three-dimensionally molded articles disclosed herein includes a step of manufacturing a three-dimensionally molded article using the ink for manufacturing three-dimensionally molded articles described above. This method can successfully manufacture the three-dimensionally molded article disclosed herein.

The manufacturing method for three-dimensionally molded articles disclosed herein may further include a step of manufacturing a portion using a transparent ink. The method further including this step can manufacture the three-dimensionally molded article disclosed herein further including a portion manufactured from a transparent ink.

An ink set for three-dimensionally molded articles disclosed herein includes the ink for manufacturing three-dimensionally molded articles described above, and a transparent ink. By using the ink set, the three-dimensionally molded article further including a portion manufactured from the transparent ink can be favorably obtained.

### ADVANTAGEOUS EFFECT OF THE INVENTION

This invention may provide for a three-dimensionally molded article colored as desired inside as well as on its outer surface.

### BRIEF DESCRIPTION OF THE DRAWINGS

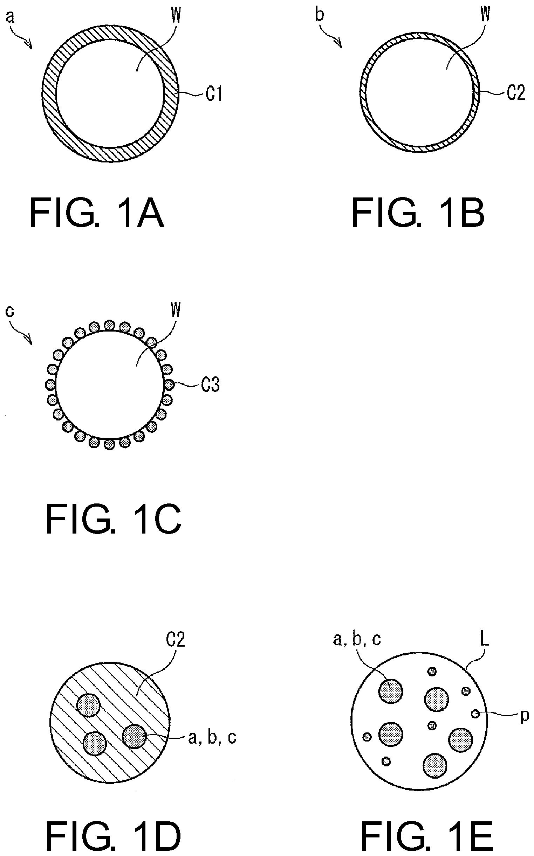

FIGs. 1A to 1E are schematic drawings, illustrating examples of an ink for manufacturing three-dimensionally molded articles disclosed herein.

### EMBODIMENTS OF THE INVENTION

### [Ink for manufacturing three-dimensionally molded articles]

An ink for manufacturing three-dimensionally molded articles disclosed herein contains a plurality of different coloring components that differ in absolute refractive index. An outer surface of one of the coloring components is at least partly covered with another coloring component. The coloring component on the inner side has opacity, reflecting light transmitted through the coloring component on the outer side, allowing for vibrant color reproduction of the outer coloring component. That is, the ink for manufacturing three-dimensionally molded articles disclosed herein contains a coloring component and a component that reflects light transmitted through the coloring component. Thus, a three-dimensionally molded article manufactured from the ink for manufacturing three-dimensionally molded articles described above can be colored as desired inside as well as on its outer surface.

The coloring component is a color element to be reproduced by the ink, examples of which may include pigments and dyes. In this invention, one of the coloring components is opaque against the color of another coloring component. In other words, this component, thus contributing to color reproduction by way of its color opacity, may be defined as a coloring component. When one of the coloring components is in the form of shells of hollow particles, a gas contained in the shells, such as air, constitutes the coloring component, because color reproduction is affected by a difference between refractive indices of the outer shells and air contained inside. For example, hollow particles of a colorless resin appear white owing to light reflection induced by a difference between refractive indices of the colorless resin and air contained inside. In this instance, the colorless resin and the contained air are both constituents of the coloring component.

A coloring component covering the outer side of another coloring component may preferably cover the whole surface of the other coloring component so as to suppress the risk of being affected by the color of the inner coloring component.

The covered coloring component having its outer side covered, that is, inner coloring component, may preferably be a white coloring component. In the ink for manufacturing three-dimensionally molded articles disclosed herein, the outer surface of the white coloring component may preferably be at least partly covered with a coloring component of any color but white, because the white coloring component excels in color opacity. Therefore, any coloring component covering the white coloring component exhibits a more vibrant color.

Examples of the white coloring component may include white pigment particles and white hollow particles. The white color excels in color opacity. Therefore, any coloring component covering the white coloring component can exhibit a more vibrant color. Examples of the white pigment particles may include titanium oxide particles.

When hollow particles are employed as the white coloring component, the hollow particles may preferably include a colorless resin so as to suppress the risk of the ink color being affected by the white color. Examples of the resin used to form the hollow particles may be recited in Japanese Unexamined Patent Publication (Translation of PCT application) No. 2009-543710, and Japanese Unexamined Patent Publication Nos. H07-179533, 2003-181274, 2005-60525, 2005-146223, 2005-272633, 2007-75698, and 2008-231241.

This invention is described in further detail referring to FIGs. 1A to IE. FIGs. 1A to IE are schematic drawings, illustrating examples of the ink for manufacturing three-dimensionally molded articles disclosed herein. For convenience, in the description hereinafter given, the coloring component on the inner side is typically in the form of white particles, and the inner coloring component has its outer side covered with a coloring component of any color but white. FIGs. 1A to 1C are drawings of white particles respectively covered with different coloring components. FIGs. 1D and 1E are drawings of inks containing the white particles.

By way of example, the ink for manufacturing three-dimensionally molded article disclosed herein may, for example, include a colored particle a obtained by circumferentially coating a white particle W with a coloring component C1, as illustrated in FIG. 1A. Examples of the coloring component C1 on the outer side may include colored resins and pigments. The white particle W may be coated with the coloring component C1, such as a colored resin or a pigment, by any suitable microcapsule manufacturing method conventionally employed. An example of the methods is described in Japanese Unexamined Patent Publication No. 2005-314540.

FIG. 1B shows another example; colored particle b obtained by dyeing the surface of the white particle W with a dye C2. Preferably, an oil dye may be used to dye the white particle. The white particle W may be dyed with the dye C2 by any suitable dyeing techniques conventionally employed. Optionally, the colored particle b may be obtained by immersing the white particle W in a dye-dissolved solvent.

Specific examples of dyes usable as the dye C2 may include oil dyes dissolvable or dispersable in organic solvents or UV monomers. Such dyes may typically be azo dyes, metal complex dyes, naphthol dyes, anthraquinone dyes, indigo dyes, carbonium dyes, quinonimine dyes, nitro dyes, nitroso dyes, benzoquinone dyes, naphthoquinone dyes, naphthalimide dyes, perinone dyes, and phthalocyanine dyes. Any one selected from these dyes may be singly used, or two or more of them may be combined and used.

FIG. 1C shows yet another example; colored particle c obtained by adhering the colored particles C3 to the surface of the white particle W. Specific examples of the particle C3 may include pre-colored powder and resin particles. Such a particle as illustrated in FIG. 1C may be obtained by dredging the particles C3 over the white particle W. To increase the adhesion between the white particle W and the particle C3, these particles may be electrified to be oppositely polarized and thereby adhered to each other by an electrostatic force. These particles may be kneaded together to have the white particle W be dredged with the particles C3.

As illustrated in FIG. 1D, the colored particles a, b, and c of FIGs. 1A to 1C may be dispersed in the dye C2.

As illustrated in FIG. IE, the colored particles a, b, and c, and colored particles p different from the examples disclosed herein may be mixedly present in a discharged liquid droplet L. In this instance, the white particles are opaque against the colors of the coloring components, allowing for vibrant color reproduction of the coloring components.

Further preferably, the ink for manufacturing three-dimensionally molded articles disclosed herein may be an ultraviolet curing ink. The ultraviolet curing ink may be quickly curable and thus easily accumulated in layers. This can accelerate the manufacturing of a three-dimensionally molded article.

The ultraviolet curing ink contains an ultraviolet curing compound. The ultraviolet curing compound may be any one selected from compounds curable by being irradiated with ultraviolet light. Examples of the ultraviolet curing compound may include curable monomers and curable oligomers that are polymerizable by being irradiated with ultraviolet light. Examples of the curable monomers may include low-viscosity acrylic monomers, vinyl ethers, oxetane-based monomers, and cyclo-aliphatic epoxy monomers. Examples of the curable oligomers may include acrylic oligomers.

The ultraviolet curing ink, when used as the ink for manufacturing three-dimensionally molded articles disclosed herein, may preferably contain a photopolymerization initiator. Examples of the photopolymerization initiator may include radically-polymerizable photopolymerization initiators.

A mixing ratio of the coloring components that differ in absolute refractive index may be suitably decided depending on desired coloration. A white coloring component may be used as one of the coloring components to which opacity against the color of the other coloring component is imparted. When the white coloring component is in the form of spherical particles, the other coloring component may preferably be added in at least an amount large enough to completely cover a surface area, 4πr², of the particle. Also when the white coloring component is in any form but spherical particles, the other coloring component may preferably be added in at least an amount large enough to completely cover the whole surface of the particle.

### [Other Ingredients]

The ink for manufacturing three-dimensionally molded articles disclosed herein may contain an unreactive resin selected from, for example, acrylic resins, epoxy resins, terpene phenol resins, and rosin esters to impart adhesiveness to a printing substrate. The unreactive resin may preferably be added in a small amount with an aim to reduce the risk of producing satellite ink droplets and to prevent the degradation of solvent resistance.

Unless the effects of this invention are compromised, the ink for manufacturing three-dimensionally molded articles disclosed herein, if necessary, may further contain any one(s) selected from the following materials to such an extent that does not impair the discharge stability; surfactants, leveling additives, matting agents, polyester resins added to modify coating properties, polyurethane resins, vinyl resins, acrylic resins, rubber resins, and waxes.

### [Three-dimensionally molded article]

A three-dimensionally molded article disclosed herein is manufactured from the ink for manufacturing three-dimensionally molded articles described above. Any parts of the three-dimensionally molded article manufactured from the ink for manufacturing three-dimensionally molded articles described above can be found to be colored as desired when they are cut and viewed in cross section. Thus, the manufactured three-dimensionally molded article excels in coloration in cross section as well.

The three-dimensionally molded article disclosed herein may further include a portion manufactured from a transparent ink. By combining a transparent portion and a portion manufactured from the ink for manufacturing three-dimensionally molded articles disclosed herein, some part of the molded article can be accentuated more or less than another part to an observer's eye. For example, a portion to be most highlighted to an observer's eye is manufactured from the ink for manufacturing three-dimensionally molded articles disclosed herein. On the other hand, a portion, which may be drawn upon for the most highlighted portion but is not necessarily as noticeable as the highlighted portion, is manufactured from the transparent ink.

A preferable example of the transparent ink may be an ultraviolet curing ink containing a dye as a coloring component. The ultraviolet curing ink is transparent and easily curable, allowing the transparent portion to be easily formed in the three-dimensionally molded article.

Specific examples of the three-dimensionally molded article disclosed herein may preferably include models of a human body, an eye, and internal organs. For example, when a model is manufactured to accurately grasp the positions of blood vessels, the transparent ink may preferably be used to form muscles in and around the blood vessels. If the ink for manufacturing three-dimensionally molded articles is used to manufacture the entire structure of the model, blood vessels running through the interior of muscles may be difficult to be discerned. The ink for manufacturing three-dimensionally molded articles disclosed herein is used to form the blood vessels, while the transparent ink is used to form the muscles. Then, the blood vessels can be readily discernible, and the positions of the blood vessels can be accurately known in contrast to the muscles. When the three-dimensionally molded article is cut in cross section, the bloods vessels are not white but may be colored similarly to the real blood vessels. Thus, a more accurately manufactured model is obtainable.

The three-dimensionally molded article disclosed herein may be favorably manufactured by the manufacturing method including the step of manufacturing the three-dimensionally molded article using the ink for manufacturing three-dimensionally molded articles described above. The three-dimensionally molded article further including a portion manufactured from the transparent ink may be favorably obtained by the manufacturing method further including the step of manufacturing a portion using a transparent ink.

This invention encompasses in its scope an ink set for manufacturing three-dimensionally molded articles. To manufacture a three-dimensionally molded article further including a portion manufactured from a transparent ink, the ink set includes the ink used to manufacture three-dimensionally molded articles described above, and the transparent ink.

### [Additional remarks]

As described so far, the ink used to manufacture three-dimensionally molded articles disclosed herein in an aspect is characterized in that the surface of the white particle W is at least partly covered with the coloring component C1, dye C2, or particles C3.

The white particle W is opaque against the colors of the coloring component C1, dye C2, and particles C3 on the outer side. This may allow for more vibrant color reproduction of the coloring components on the outer side. The white color excels in color opacity. Therefore, the coloring component C1, dye C2, and particles C3 covering the white particle W exhibits more vibrant colors.

In one embodiment of the ink for manufacturing three-dimensionally molded articles disclosed herein, the white particle W is preferably a white pigment particle. The white pigment particle excels in color opacity, allowing for more vibrant color reproduction of the coloring component covering the white pigment particle.

In one embodiment of the ink for manufacturing three-dimensionally molded articles disclosed herein, preferably, the white coloring component is in the form of hollow particles, and outer surfaces of the hollow particles is at least partly covered with a coloring component of any color but white. The white hollow particles also excel in color opacity like the pigment particles. Therefore, any coloring component covering the white pigment particles exhibits a more vibrant color.

This invention is not necessarily limited to the embodiment described so far and may be carried out in many other forms. The technical scope of this invention encompasses any modifications within the technical scope disclosed herein defined by the appended claims and embodiments obtained by variously combining the technical means disclosed herein.

### INDUSTRIAL APPLICABILITY

This invention is usefully applicable to the manufacturing of three-dimensionally molded articles.

## Claims

1. An ink for manufacturing a three-dimensionally molded article comprising a plurality of different coloring components that differ in absolute refractive index,
an outer surface of a white coloring component (W) being at least partly covered with another one of the coloring components (C1,C3) except white obtained by coating a white particle (W) with a colored resin of any color except white or by adhering a pre-colored resin particle of any color except white.

2. The ink for manufacturing a three-dimensionally molded article as set forth in claim 1, wherein an outer surface of a white coloring component is at least partly covered with a coloring component of any color but white.

3. The ink for manufacturing a three-dimensionally molded article as set forth in claim 2, wherein the white coloring component is in the form of particles of a white pigment.

4. The ink for manufacturing a three-dimensionally molded article as set forth in claim 2, wherein the white coloring component is in the form of hollow particles, and outer surfaces of the hollow particles are at least partly covered with a coloring component of any color but white.

5. A three-dimensionally molded article manufactured from the ink for manufacturing a three-dimensionally molded article as set forth in any one of claims 1 to 4.

6. The three-dimensionally molded article as set forth in claim 5, further comprising a portion manufactured from a transparent ink.

7. A manufacturing method for a three-dimensionally molded article, comprising a step of manufacturing a three-dimensionally molded article using the ink for manufacturing a three-dimensionally molded article as set forth in any one of claims 1 to 4.

8. The manufacturing method for a three-dimensionally molded article as set forth in claim 7, further comprising a step of manufacturing a portion using a transparent ink.

9. An ink set, comprising the ink for manufacturing a three-dimensionally molded article as set forth in any one of claims 1 to 4, and a transparent ink.

## Patentansprüche

1. Eine Tinte zur Herstellung eines dreidimensional geformten Körpers, umfassend
eine Vielzahl von verschiedenen färbenden Komponenten, die sich im absoluten Brechungsindex unterscheiden,
eine äußere Oberfläche einer weißen färbenden Komponente (W), die zumindest teilweise mit einer anderen der färbenden Komponenten (C1,C3) außer Weiß bedeckt ist, die durch Beschichten eines weißen Partikels (W) mit einem gefärbten Harz von irgendeiner Farbe außer Weiß oder durch Anlagern eines vorgefärbten Harzpartikels von irgendeiner Farbe außer Weiß erhalten wurde.

2. Die Tinte zur Herstellung eines dreidimensional geformten Körpers gemäß Anspruch 1, worin eine obere Oberfläche einer weißen färbenden Komponente zumindest teilweise mit einer färbenden Komponente von irgendeiner Farbe außer Weiß beschichtet ist.

3. Die Tinte zur Herstellung eines dreidimensional geformten Körpers gemäß Anspruch 2, worin die weiße färbende Komponente in der Form von Partikeln eines weißen Pigmentes vorliegt.

4. Die Tinte zur Herstellung eines dreidimensional geformten Körpers gemäß Anspruch 2, worin die weiße färbende Komponente in der Form von hohlen Partikeln vorliegt, und äußere Oberflächen der hohlen Partikel zumindest teilweise mit einer färbenden Komponente von irgendeiner Farbe außer Weiß beschichtet sind.

5. Ein dreidimensional geformter Körper, hergestellt mittels der Tinte zur Herstellung eines dreidimensional geformten Körpers gemäß irgendeinem der Ansprüche 1 bis 4.

6. Der dreidimensional geformte Körper gemäß Anspruch 5, weiterhin umfassend einen Teil, der mittels einer transparenten Tinte hergestellt wurde.

7. Eine Methode zur Herstellung eines dreidimensional geformten Artikels, umfassend einen Schritt der Herstellung eines dreidimensional geformten Körpers, wobei die Tinte zur Herstellung eines dreidimensional geformten Körpers gemäß irgendeinem der Ansprüche 1 bis 4 verwendet wird.

8. Die Methode zur Herstellung eines dreidimensional geformten Artikels von Anspruch 7, weiterhin umfassend einen Schritt der Herstellung eines Teils unter Verwendung einer transparenten Tinte.

9. Ein Tintenset, umfassend die Tinte für die Herstellung eines dreidimensional geformten Artikels gemäß einem der Ansprüche 1 bis 4, und eine transparente Tinte.

## Revendications

1. Encre pour la fabrication d'un article tridimensionnel moulé comprenant une pluralité de différents constituants de coloration qui diffèrent par l'indice de réfraction absolu, une surface extérieure à base d'un constituant de coloration blanc (W) étant au moins partiellement recouverte avec un autre parmi les constituants de coloration (C1,C3), à l'exception du blanc, obtenue en recouvrant une particule blanche (W) avec une résine colorée d'une couleur quelconque, à l'exception du blanc, ou en faisant adhérer une particule de résine pré-colorée d'une couleur quelconque, à l'exception du blanc.

2. Encre pour la fabrication d'un article tridimensionnel moulé selon la revendication 1, où une surface extérieure d'un constituant de coloration blanche est au moins partiellement recouverte avec un constituant de coloration d'une couleur quelconque, à l'exception du blanc.

3. Encre pour la fabrication d'un article tridimensionnel moulé selon la revendication 2, où le constituant de coloration blanche est sous la forme de particules d'un pigment blanc.

4. Encre pour la fabrication d'un article tridimensionnel moulé selon la revendication 2, où le constituant de coloration blanche est sous la forme de particules creuses, et des surfaces extérieures des particules creuses sont au moins partiellement recouvertes avec un constituant de coloration d'une couleur quelconque, à l'exception du blanc.

5. Article tridimensionnel moulé fabriqué à base de l'encre pour la fabrication de l'article tridimensionnel moulé selon l'une quelconque des revendications 1 à 4.

6. Article tridimensionnel moulé selon la revendication 5, comprenant en outre une partie fabriquée à base d'encre transparente.

7. Procédé de fabrication pour un article tridimensionnel moulé, comprenant une étape de fabrication d'un article tridimensionnel moulé en utilisant l'encre pour la fabrication d'un article tridimensionnel moulé selon l'une quelconque des revendications 1 à 4.

8. Procédé de fabrication pour un article tridimensionnel moulé selon la revendication 7, comprenant en outre une étape de fabrication d'une partie en utilisant une encre transparente.

9. Ensemble d'encre, comprenant l'encre pour la fabrication d'un article tridimensionnel moulé l'une quelconque des revendications 1 à 4, et une encre transparente.
